(19) Europäisches Patentamt / European Patent Office / Office européen des brevets

(11) **EP 3 706 238 B1**

(12) **FASCICULE DE BREVET EUROPEEN**

(45) Date de publication et mention de la délivrance du brevet:
**26.07.2023 Bulletin 2023/30**

(21) Numéro de dépôt: **20160968.2**

(22) Date de dépôt: **04.03.2020**

(51) Classification Internationale des Brevets (IPC):
*H01Q 1/12* (2006.01)    *H01Q 3/00* (2006.01)
*H01Q 3/26* (2006.01)    *H04B 17/21* (2015.01)
*H04B 17/00* (2015.01)    *H04B 17/12* (2015.01)
*H04B 17/13* (2015.01)

(52) Classification Coopérative des Brevets (CPC):
**H01Q 1/1257; H01Q 3/005; H01Q 3/267;
H04B 17/0085; H04B 17/12; H04B 17/13;
H04B 17/21**

(54) **SYSTEME DE CALIBRATION DEPUIS LE SOL D'UNE CHARGE UTILE D'UN SATELLITE**

KALIBRIERSYSTEM EINER NUTZLAST EINES SATELLITEN VOM BODEN AUS

GROUND CALIBRATION SYSTEM OF A PAYLOAD OF A SATELLITE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.03.2019 FR 1902216**

(43) Date de publication de la demande:
**09.09.2020 Bulletin 2020/37**

(73) Titulaire: **Thales
92400 Courbevoie (FR)**

(72) Inventeur: **OSTER, Yann
31037 TOULOUSE (FR)**

(74) Mandataire: **Atout PI Laplace
Immeuble "Visium"
22, avenue Aristide Briand
94117 Arcueil Cedex (FR)**

(56) Documents cités:
**EP-A1- 2 371 072**    **EP-A1- 2 371 075**
**EP-A1- 2 555 016**    **EP-A1- 3 229 383**
**EP-B1- 2 371 072**    **EP-B1- 2 371 075**
**WO-A1-2014/169934**    **US-A1- 2006 044 185**

**Description**

L'invention concerne le domaine de la calibration d'une charge utile de satellite en orbite depuis le sol. Elle porte sur un système et un procédé de calibration pour une charge utile réalisant une fonction de formation de faisceaux en réception et/ou en émission. La calibration a pour objectif d'appairer les chaines de traitement associées à chaque voie d'émission ou de réception de la charge utile.

Le problème technique que propose de résoudre la présente invention concerne l'appairage des voies d'émission ou de réception d'une charge utile de satellite, incluant à la fois l'appairage des chaines de traitement analogiques et des chaines de traitement numériques.

Le besoin concerne les charges utiles à bord des satellites, notamment pour des satellites de télécommunication, qui sont confrontées à des variations quotidiennes de température et au vieillissement sur des durées de vies pouvant excéder quinze ans.

Les antennes actives des satellites utilisent un grand nombre de chaînes analogiques radiofréquences (typiquement de l'ordre de quelques dizaines à quelques centaines) dont les réponses fréquentielles doivent être appairées afin de ne pas dégrader leur performance en directivité, et en rapport signal à interférence dans le cas couverture multifaisceaux avec réutilisation de fréquence. Les réponses fréquentielles des chaînes radiofréquence varient avec la température et dérivent du fait du vieillissement.

D'autre part, la formation numérique de faisceau, réalisée dans un équipement numérique en aval (pour une antenne en réception) ou en amont (pour une antenne en émission) des chaînes radiofréquences analogiques, est confrontée à des dispersions des latences sur les voies numériques, du fait de la montée en fréquence de traitement, pour des applications large bande (bande de fréquence excédant par exemple 500MHz). Avec la montée en fréquence d'échantillonnage des convertisseurs analogique numérique et numérique analogique, il est de plus en plus difficile de garantir le synchronisme de l'échantillonnage du signal, entre les différentes chaines radiofréquences analogiques, du fait de la dispersion de la distribution des signaux, des horloges et de la dispersion des temps d'ouverture des convertisseurs. Du fait de leur complexité, les traitements numériques sont généralement répartis entre plusieurs circuits intégrés mettant en oeuvre des diviseurs d'horloge qui peuvent induire des ambiguïtés de phase dans les signaux d'horloge. Par ailleurs les circuits intégrés sont éventuellement interfacés entre eux via des interfaces série rapides (de type High Speed Serial Link) impliquant également des diviseurs d'horloge et dont la latence peut être indéfinie à chaque mise sous tension. Ces contraintes matérielles induisent des disparités de latence entre les voies de traitement numérique. Ces dispersions de latence doivent être compensées pour assurer de bonnes performances.

Ainsi, il existe un besoin pour estimer et corriger conjointement les défauts des chaines analogiques et numériques de différentes voies de traitement d'une charge utile de satellite réalisant une fonction de formation de faisceaux.

De manière générale, les techniques connues traitent de la calibration des chaînes radiofréquences analogiques et de l'antenne mais pas des défauts de latence et de synchronisation induits par la partie numérique des voies de la charge utile.

L'état de l'art contient différentes solutions de calibration de charge utile depuis le sol.

Une première solution, décrite dans la demande de brevet américain US5572219 A, concerne un satellite muni d'une antenne réseau de transmission et d'une voie de transmission séparée pour transmettre un signal de référence. Le signal de référence et le signal de calibration sont générés de manière cohérente. Les différents éléments rayonnants de l'antenne émettent le signal de calibration préalablement codé par des séquences orthogonales afin de les différencier au sol. La séquence orthogonale spécifique à chaque élément rayonnant est alternativement inversée (polarité), ce qui équivaut à une modulation de phase de 0/180°. Le traitement du signal reçu par une station sol, c'est-à-dire du signal de référence et des signaux codés issus des éléments rayonnants de l'antenne réseau, permet d'estimer le gain et la phase de chaque élément rayonnant.

La solution ci-dessus présente les inconvénients suivants. Elle ne s'applique pas à une antenne en réception. Elle impose l'arrêt du service télécom rendu par le satellite. Elle n'adresse pas les problèmes de dispersions des chaînes analogiques en fonction de la fréquence, ni les différentiels de latence au sein des fonctions numériques, ni les écarts de synchronisation des convertisseurs numérique/analogique. Elle requiert une électronique et une antenne spécifique pour émettre un signal de référence. Elle suppose un fonctionnement parfaitement synchrone des traitements numériques pour générer de manière cohérente les séquences orthogonales, afin de garantir l'orthogonalité des signaux à la réception et de minimiser l'inter-corrélation entre ces signaux codés.

L'article "A low complexity calibration method for space-borne phased array antenna" de Shuai Wang 2016 décrit le cas d'une antenne de transmission. Tous les éléments rayonnants de l'antenne sont excités par un même signal de calibration qui est étalé par des séquences pseudo-aléatoires PN (Pseudo Noise) spécifiques aux éléments rayonnants afin de pouvoir séparer les signaux au sol. En pratique, il s'agit de sous-séquences tirées d'une même séquence PN par décalages, afin de simplifier la synchronisation PN au sol. Ceci permet de paralléliser les mesures sur les éléments rayonnants, mais le temps des mesures est augmenté de la longueur des séquences. Les séquences PN permettent une séparation correcte lors du dés-étalement, lorsque les signaux ne sont pas synchrones.

Cette solution présente les inconvénients suivants. Elle n'aborde pas les dispersions des chaînes analogiques en fonction de la fréquence, ni les différentiels de latence au sein des fonctions numériques, ni les écarts de synchronisation des convertisseurs numérique/analogique. Les séquences PN n'étant pas strictement orthogonales, la séparation de chaque signal est pénalisée par des interférences issues des autres signaux.

Une autre solution, décrite dans la demande de brevet US7825852 B2, concerne un satellite muni de deux antennes réseau fonctionnant respectivement en émission et en réception. Cette méthode consiste à moduler la phase de 0°/180° de chaque élément rayonnant à tour de rôle, pour la première antenne, puis pour la seconde antenne, ceci sans couper le service télécom rendu. Pendant la calibration, un seul élément rayonnant est affecté par le signal de calibration, ce qui dégrade très marginalement le service télécom rendu dans le cas d'une antenne réseau. La station sol qui émet et reçoit le signal est couplée à un ordinateur pour analyser l'impact de la modulation des différents éléments rayonnants, pour déterminer le gain et la phase de chaque élément rayonnant. La fréquence du signal de calibration est choisie pour ne pas interférer avec le signal utile. La compensation estimée pour la fréquence du signal de calibration, est ajustée par calcul pour s'appliquer à la fréquence du signal utile.

Cette solution ne résout pas le problème des dispersions des chaînes analogiques en fonction de la fréquence, ni des différentiels de latence au sein des fonctions numériques, ni les écarts de synchronisation des convertisseurs analogique / numérique et numérique/analogique.

Il est aussi connu des techniques algébriques pour appairer les chaînes radiofréquences analogiques en utilisant des convertisseurs analogique numérique ADC fonctionnant de manière cohérente (même fréquence et même phase d'horloge pour un même instant de conversion sur toutes les voies). Par exemple, différentes techniques algébriques sont citées dans l'article « experimental performance of calibration and direction-finding algorithms » de Pierre & Kaveh - 1991. Elles consistent à numériser de manière synchrone les signaux des voies radiofréquence, pour estimer la matrice empirique de corrélation, qui est ensuite décomposée sur une base de vecteurs propres, ce qui permet d'identifier les directions d'arrivée empiriques. Des optimisations de type moindre carré permettent de déduire les coefficients complexes correspondant aux défauts des voies analogiques RF (amplitude, phase).

Cependant, ces techniques s'appliquent uniquement au cas de processeur numérique avec un échantillonnage parfaitement synchrone et un traitement cohérent, et pour des antennes en réception. Elles ne traitent pas les dispersions des chaînes analogiques variables avec la fréquence.

On connait par ailleurs les solutions décrites dans les demandes de brevet EP 3 229 383 A1, EP 2 555 016 A1, EP 2 371 072 A1 et US 2006/044185 A1.

L'invention propose une technique de calibration globale pour calibrer ensemble les défauts d'origine analogique et numérique des voies de traitement d'une charge utile, en fonction de la fréquence et à la fois pour un fonctionnement en émission ou en réception.

L'invention présente notamment les avantages suivants. Elle permet une estimation conjointe des défauts d'origine analogique et des défauts d'origine numérique. Les défauts concernent des différences en terme de retard, de gain et de phase entre les voies, sur la bande utile de fréquences. Les défauts d'origine analogique concernent le comportement des chaines radiofréquences, des problèmes de distribution de signaux et d'horloges pour les convertisseurs entre chaines ou encore de temps d'ouverture différents des convertisseurs analogique numérique ou numérique analogique. Les défauts d'origine numérique concernent des différences de latence entre voies numériques, par exemple du fait d'ambiguïtés de phase des diviseurs d'horloge ou des problèmes de latence indéfinie dans les interfaces asynchrones entre les circuits intégrés.

La solution proposée est sans impact significatif au niveau de la charge utile, notamment sur son coût, sa masse ou sa consommation.

Elle permet de réaliser le traitement de calibration à bord du satellite ou au sol.

Elle se base sur des mesures différentielles qui ne sont pas dépendantes des conditions de propagation des liaisons entre le sol et le satellite.

Elle permet de calibrer toutes les voies de traitement pour toute la bande utile de fréquences.

Enfin, elle permet de maintenir le service rendu par le satellite simultanément à la calibration.

L'invention a, selon une première variante particulière, pour objet un système de calibration d'une charge utile d'un satellite selon la revendication 1.

L'invention a, selon une deuxième variante particulière, pour objet un système de calibration d'une charge utile d'un satellite selon la revendication 2.

Selon un aspect particulier de la première variante particulière de l'invention, le dispositif de calibration est configuré pour recevoir, pour chaque voie de réception, une séquence temporelle numérisée d'un signal de calibration reçu par le satellite, la séquence étant prélevée dans l'ensemble de circuits intégrés numériques sur l'ensemble des voies, la séquence étant prélevée sur un même intervalle temporel pour au moins un sous-ensemble des voies.

Selon un aspect particulier de la première variante de l'invention, le dispositif de calibration est implémenté dans la station sol, la charge utile étant configurée pour recevoir un signal de calibration, l'ensemble de circuits intégrés numériques étant configuré pour prélever, pour chaque voie, la séquence temporelle numérique du signal de calibration et corriger le gain, la phase et le retard relatifs de la voie par rapport à la voie de référence.

Selon un aspect particulier de la première variante de l'invention, l'ensemble de circuits intégrés numériques comprend un sous-ensemble de circuits intégrés numériques réalisant une fonction de formation de faisceaux pour au moins une partie des voies, l'ensemble de circuits intégrés numériques étant configuré pour prélever la séquence temporelle numérique du signal de calibration dans le dernier circuit intégré numérique du sous-ensemble dans le sens de propagation du signal.

Selon un aspect particulier de la deuxième variante, le système de calibration comprend en outre la charge utile, la charge utile étant configurée pour

- Générer le signal de calibration dans l'ensemble de circuits intégrés numériques,
- Emettre le signal de calibration depuis le satellite vers la station sol,
- Corriger, dans l'ensemble de circuits intégrés numériques, le gain, la phase et le retard relatifs de la voie par rapport à la voie de référence.

Selon un aspect particulier de la deuxième variante de l'invention, l'ensemble de circuits intégrés numériques comprend un sous-ensemble de circuits numériques réalisant une fonction de formation de faisceaux pour au moins une partie des voies, l'ensemble de circuits intégrés numériques étant configuré pour générer le signal de calibration dans le premier circuit intégré numérique du sous-ensemble dans le sens de propagation du signal.

Selon un aspect particulier de la deuxième variante de l'invention,

- la charge utile est en outre configurée pour générer au moins deux signaux auxiliaires comprenant chacun au moins une porteuse fréquentielle différente des fréquences du signal de calibration et différente des fréquences des autres signaux auxiliaires, un signal auxiliaire étant généré à partir du signal de calibration et d'un autre signal auxiliaire,

- le dispositif de calibration est configuré pour :
- pour chaque voie autre que la voie de référence, recevoir les au moins deux signaux auxiliaires émis sur la voie de référence et le signal de calibration émis sur la voie, générer un signal de référence de fréquences identiques aux fréquences du signal de calibration, le signal de référence étant généré à partir des au moins deux signaux auxiliaires reçus et déterminer un gain complexe relatif entre le signal de calibration reçu et le signal de référence.

Selon un aspect particulier de la deuxième variante de l'invention, le dispositif de calibration est en outre configuré pour, dans une étape préalable:

- Recevoir les au moins deux signaux auxiliaires et le signal de calibration émis sur la voie de référence,
- générer un premier signal de référence de fréquences identiques aux fréquences du signal de calibration, le signal de référence étant généré à partir des au moins deux signaux auxiliaires reçus,
- déterminer un gain complexe relatif correctif entre le signal de calibration reçu à l'étape préalable et le premier signal de référence,
- Pour chaque voie autre que la voie de référence, corriger le gain complexe relatif à partir du gain complexe relatif correctif.

Selon un aspect particulier de l'invention, le signal de calibration est composé d'une pluralité de porteuses fréquentielles.

Les dessins annexés illustrent l'invention :

[Fig.1] représente un schéma d'un système de calibration d'une charge utile d'un satellite ayant une antenne fonctionnant en réception selon un premier mode de réalisation de l'invention,

[Fig.2] représente un organigramme détaillant les étapes de réalisation d'un procédé de calibration du système de la figure 1 selon un mode de réalisation de l'invention,

[Fig.3] représente un diagramme illustrant une étape du procédé de la figure 2 pour estimer un retard relatif,

[Fig.4] représente un diagramme illustrant une étape du procédé de la figure 2 pour estimer une phase relative,

[Fig.5] représente un schéma d'un système de calibration d'une charge utile d'un satellite ayant une antenne fonctionnant en émission selon un second mode de réalisation de l'invention,

[Fig.6] représente un organigramme détaillant les étapes de réalisation d'un procédé de calibration du système de la figure 5 selon un mode de réalisation de l'invention,

[Fig.7] représente un organigramme décrivant les étapes d'une variante particulière de réalisation de l'invention,

[Fig.8] représente un diagramme illustrant l'exploitation d'un signal de calibration particulier avec des signaux auxiliaires,

[Fig.9] représente un synoptique d'un dispositif permettant de générer le signal de calibration particulier de la figure 8,
[Fig.10] représente un synoptique d'un dispositif permettant de réaliser la calibration à partir du signal de calibration particulier.

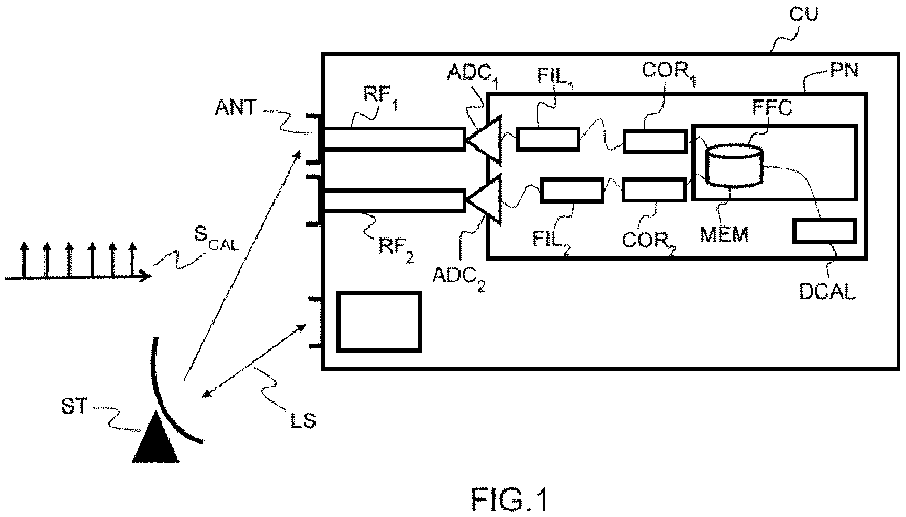

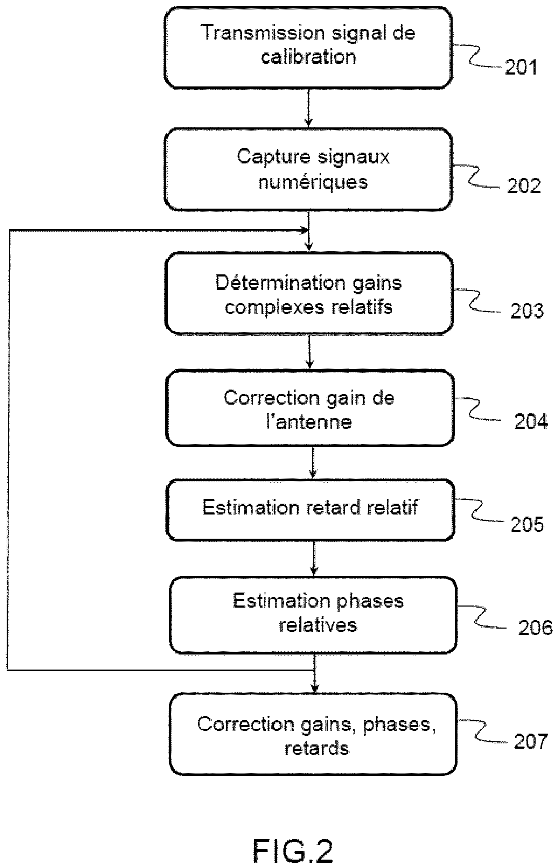

Les figures 1 et 2 illustrent la mise en oeuvre d'un système et d'un procédé de calibration d'une charge utile d'un satellite en orbite selon un premier mode de réalisation de l'invention pour lequel l'antenne du satellite fonctionne en réception.

Le procédé de calibration selon l'invention est exécuté en partie sur une (ou plusieurs) station(s) au sol ST et en partie dans la charge utile CU d'un satellite en orbite. La station sol ST comprend notamment une antenne pointée vers le satellite, une chaîne d'émission et de réception pour communiquer avec le satellite, un convertisseur analogique numérique et numérique analogique. Dans le cas où le procédé de calibration est mis en oeuvre au sol, la station sol ST ou un autre équipement distant et interfacé avec la station sol ST comprend au moins un moyen de communication avec le satellite via une liaison sécurisée LS, une mémoire pour mémoriser le signal reçu numérisé et un dispositif de calcul pour traiter le signal. La charge utile CU comprend une ou plusieurs antenne(s) ANT ou réseau antennaire constitué de plusieurs éléments rayonnants. Chaque élément rayonnant reçoit un signal qui est traité dans la charge utile CU par une voie de traitement. La charge utile CU présente ainsi un fonctionnement multi-voies. Sur la figure 1, on a représenté une charge utile comprenant deux voies de réception mais le nombre de voies est en général plus important. Un objectif de la calibration est de réaliser un appairage des voies de réception, prenant en compte à la fois les traitements analogiques et numériques. Autrement dit, un objectif de la calibration est d'estimer les erreurs relatives de gain, phase et retard entre les différentes voies afin de les corriger de sorte à obtenir un appairage précis des voies entre elles.

Chaque voie de traitement comprend une chaine radiofréquence analogique $RF_1,RF_2$ qui est constituée d'un ou plusieurs filtre(s), d'un ou plusieurs amplificateur(s) et éventuellement d'un ou plusieurs mélangeur(s) pour réaliser une transposition en fréquence du signal reçu.

En sortie de chaque chaine radiofréquence analogique de réception, un convertisseur analogique numérique $ADC_1,ADC_2$ est positionné pour convertir les signaux analogiques en signaux numériques qui sont fournis à un ensemble de circuits intégrés numériques PN. Chaque circuit intégré numérique est, par exemple, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array ») ou un ensemble de portes logiques ou encore un processeur de signaux ou un processeur générique.

L'ensemble de circuits intégrés numériques PN comprend, par exemple, un filtre numérique $FIL_1,FIL_2$ par voie de traitement et un circuit de formation de faisceaux FFC, réalisant une fonction de formation de faisceaux commune à toutes les voies de traitement. Le circuit de formation de faisceaux FFC a notamment pour fonction de combiner linéairement les signaux reçus avec un ensemble de gains complexes (amplitude et phase) particuliers pour former au moins un faisceau dans la direction souhaitée, relativement à un repère de l'antenne, afin de recevoir les signaux utiles. La combinaison particulière des signaux reçus avec des gains complexes constitue une loi de combinaison ou une loi de formation de faisceau.

L'exemple de la figure 1 est donné à titre purement illustratif et non limitatif. En particulier, l'ensemble de circuits intégrés numériques peut présenter une architecture modulaire différente de celle de la figure 1. Par exemple, il peut comporter plusieurs séries de circuits intégrés numériques pour chaque voie ou plusieurs circuits intégrés de formation de faisceau fonctionnant en parallèle et en cascade pour des sous-groupes de voies.

Dans tous les cas d'architecture, l'ensemble de circuits intégrés numériques comprend un moyen MEM pour capturer ou enregistrer de manière cohérente les signaux numériques de chaque voie dans le dernier circuit intégré numérique finalisant la formation de faisceau en réception, ou sur une section d'un sous-ensemble de circuits intégrés fonctionnant de manière cohérente, ce sous-ensemble de circuits incluant le dernier circuit finalisant la formation de faisceau. Le terme « cohérent » se réfère ici à une iso-latence entre voies entre la section de circuits intégrés fonctionnant de manière cohérente et la sortie du dispositif complet implémentant la fonction de formation de faisceau. Autrement dit, les traitements effectués en sortie de l'ensemble de circuits intégrés au niveau duquel sont prélevés les signaux numériques, présentent une iso-latence entre les différentes voies de réception jusqu'à la finalisation de la formation de faisceau. Sur l'exemple de la figure 1, le dernier circuit intégré numérique finalisant la formation de faisceau en réception est l'unique circuit de formation de faisceaux FFC. Le moyen de capture peut consister en une mémoire MEM qui permet de sauvegarder les signaux numériques en entrée du module FFC ou de tout autre moyen équivalent. Le moyen MEM a par exemple pour fonction de mémoriser les signaux d'entrée d'un circuit FFC, ou bien de mémoriser les signaux de sortie d'un ensemble de fonctions de formation de faisceaux traitant simultanément et de manière synchrone les mêmes signaux pour former différents faisceaux. La programmation des lois de formation de faisceau permet de propager tout signal d'entrée d'une voie numérique vers une entrée du dernier circuit FFC ou sur une sortie d'une fonction de formation de faisceaux. La mémorisation cohérente des signaux des voies numériques peut être réalisée soit pour l'ensemble des voies, comme dans le cas de la figure 1, soit par sous-ensembles de voies en conservant une même voie de référence.

Le procédé de calibration selon l'invention est implémenté dans un dispositif numérique de calibration DCAL qui reçoit les signaux numériques prélevés par le moyen MEM. Le dispositif numérique de calibration DCAL est implémenté soit dans l'ensemble de circuits intégrés numériques PN à bord du satellite ou alors dans une station sol ST qui est celle utilisée pour générer et transmettre le signal de calibration ou une autre.

Le procédé de calibration débute par la transmission 201 d'un signal de calibration $S_{CAL}$ par une station sol ST vers le satellite qui reçoit ce signal. Le signal de calibration comporte des porteuses, modulées par un signal prédéfini ou non modulées, dans toute la bande utile de fonctionnement de l'antenne ANT de réception du satellite. Par exemple, le signal de calibration est composé de plusieurs porteuses espacées, préférentiellement de façon régulière, dans la bande utile de fonctionnement du système.

La modulation du signal de calibration par une séquence connue (via une technique d'étalement de spectre) permet de séparer le signal de calibration en présence de signal utile, avec la possibilité de réduire la puissance du signal de calibration pour ne pas impacter le signal utile.

Avantageusement, le pas de fréquence Δf entre deux porteuses adjacentes du signal de calibration est inférieur ou égal à un seuil correspondant à une rotation de phase de π pour un retard relatif maximum Δτ et donné par la relation suivante :

[Math. 1]

$$\Delta f = \frac{\pi}{2\pi * \Delta\tau} = \frac{1}{2\Delta\tau}$$

Le signal de calibration est reçu par l'antenne ANT, traverse les chaines de traitement analogique et numérique de chaque voie et est capturé 202 par la mémoire MEM en entrée (ou en sortie) du dernier circuit intégré numérique FFC, ceci de manière cohérente pour l'ensemble des voies ou par sous-ensembles.

Les étapes suivantes du procédé de calibration consistent à estimer les désappairages entre voies de traitement à partir des signaux numériques capturés. Autrement dit, il s'agit d'estimer les erreurs relatives entre chaque voie et une voie de référence, ces erreurs étant estimées en gain, phase et retard. Les étapes d'estimation de ces écarts peuvent être exécutées à bord du satellite, par un circuit intégré numérique supplémentaire ou un calculateur ou bien par une station sol ST (qui peut être la même station qui est en charge de l'émission du signal de calibration ou une station différente non représentée à la figure 1). Dans ce second cas, les signaux numériques capturés dans la mémoire MEM sont transmis à la station sol ST via une liaison numérique protégée LS, par exemple au moyen d'un code correcteur d'erreur. Dans tous les cas, les signaux numériques sont prélevés pour un même intervalle temporel. Dans une variante de réalisation, les signaux numériques sont prélevés sur un même intervalle temporel pour un sousgroupe de voies. Par exemple, l'ensemble des voies est décomposé en plusieurs sous-groupes de voies et les signaux numériques sont prélevés successivement sur chacun des sous-groupes de voies, pour différents intervalles temporels successifs.

Parmi l'ensemble des voies de traitement, une voie de référence est fixée de façon arbitraire, par exemple la première voie. On note par la suite, $G_{k/1}$, $\tau_{k/1}$, $d\varphi_{k/1}$ respectivement le gain relatif, le retard relatif et l'écart de phase relative introduits entre la voie de traitement d'indice k et la voie de traitement de référence. Dans une étape 203, on estime en premier lieu, pour chaque voie de traitement k autre que la voie de référence, un gain complexe relatif $G_{k/1} \cdot e^{j\varphi k/1}$, caractérisant cette voie par rapport à la voie de référence. L'étape 203 est effectuée pour chaque fréquence porteuse du signal de calibration. Pour cela, une étape préalable de filtrage du signal numérique autour de chaque fréquence porteuse est réalisée. Le gain complexe relatif est déterminé en effectuant un calcul d'intercorrélation entre le signal numérique de la voie de référence et le signal numérique d'une autre voie. En effet, le signal de calibration étant propagé à l'identique sur chaque voie, le résultat de l'intercorrélation des signaux permet d'obtenir un gain relatif qui contient le gain et la phase relatifs, pour chaque fréquence, entre les deux voies de traitement. Ce gain relatif résulte des différences induites par les composants analogiques et numériques des deux voies en termes de gain, phase et retard. Le calcul d'intercorrélation est, par exemple, réalisé soit directement dans le domaine temporel par calcul de corrélation, soit indirectement dans le domaine fréquentiel au moyen de deux transformées de Fourier directes, d'une conjugaison complexe, d'une multiplication complexe et d'une transformée de Fourier indirecte, selon des techniques connues de l'Homme de l'art.

A l'issue de l'étape 203, on obtient, pour chaque fréquence porteuse du signal de calibration et pour chaque voie de traitement (autre que la voie de référence), un gain complexe relatif par rapport à la voie de référence.

Ensuite, les gains relatifs sont corrigés, dans une étape 204, du différentiel de gain de l'antenne entre la voie de référence et la voie de traitement. A noter que cette étape de correction peut aussi être réalisée avant l'étape 203, directement sur les signaux numériques. Le gain de l'antenne est déterminé, pour chaque élément antennaire, à partir de la direction d'arrivée du signal relativement à un repère de l'antenne et de la fréquence. Le gain de l'antenne pour chaque élément antennaire est, par exemple, déterminé à partir d'un modèle de la fonction de transfert de l'antenne en fonction de la fréquence et de la direction d'arrivée du signal.

Après l'étape 204, on obtient un ensemble de gains complexes relatifs caractérisant le comportement des différentes voies analogiques et numériques pour chaque fréquence porteuse du signal de calibration. La réponse fréquentielle en gain d'une chaîne d'indice k relativement à la chaîne de référence est définie par le module du gain complexe $G_{k/1}$ pour les différentes fréquences du signal de calibration.

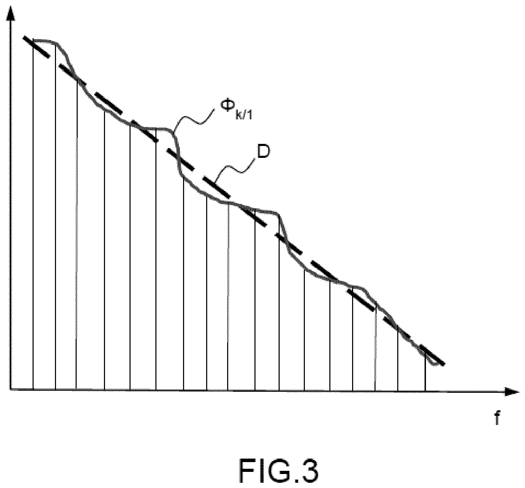

Dans la suite du procédé, on estime 205,206 ensuite le retard relatif $\tau_{k,1}$, commun à l'ensemble des fréquences du signal de calibration, et le déphasage relatif $d\varphi_{k/1}$ spécifique pour chaque fréquence du signal de calibration, pour toute chaîne d'indice k relativement à la chaîne de référence. Le retard relatif correctif $\tau_{k,1}$ est déterminé à partir de l'ensemble des valeurs de phases (obtenues à partir des gains complexes et après déroulement) pour chaque fréquence porteuse du signal de calibration. Ce principe est illustré à la figure 3 qui représente, sur un diagramme, l'évolution de la phase relative $\Phi_{k/1}$ d'une voie d'indice k par rapport à la voie de référence en fonction de la fréquence f. La phase relative est déroulée à partir des phases des gains complexes relatifs qui sont exprimées modulo $2\pi$. Le terme « déroulement de phase » ou « phase unwrapping » en anglais désigne ici le processus qui consiste à développer la phase à partir de sa valeur modulo $2\pi$. De cette façon on obtient une courbe de phase qui peut être approximée par une droite D dont l'équation est donnée par la relation suivante, avec $\tau_{k,1}$ le retard relatif entre la voie k et la voie de référence et $\varphi^0_{k,1}$ la phase relative pour une fréquence nulle.

[Math. 2]

$$\varphi_{k,1}(f) = -2\pi f \tau_{k,1} + \varphi^0_{k,1}$$

Le retard relatif $\tau_{k,1}$ entre la voie k et la voie de référence résulte de la somme du retard relatif induit par la chaine radiofréquence analogique et de la latence relative induite par les traitements numériques. Il est déterminé en estimant la pente de la droite D obtenue en effectuant une régression linéaire à partir des mesures de phases déroulées.

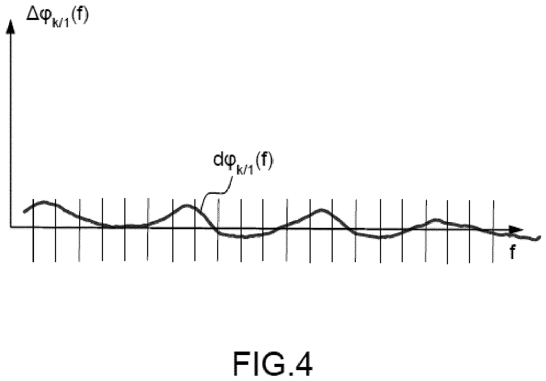

Ensuite, les écarts de phase relatifs $d\varphi_{k/1}(f)$, en fonction de la fréquence, entre la voie k et la voie de référence, sont déterminés, dans une étape 206, en déterminant les résidus entre la phase relative déroulée, obtenue à partir des mesures de gains complexes, et son approximation par la droite D obtenue par régression linéaire de la phase relative déroulée. Autrement dit, les phases correspondant à la droite D dont la pente est égale au retard relatif sont calculées puis soustraites aux phases $\varphi_{k/1}(f)$, pour chaque composante fréquentielle f du signal de calibration. On obtient alors les écarts relatifs de phase $d\varphi_{k/1}(f)$, en fonction de la fréquence, tels qu'illustrés sur la figure 4. Il s'agit des écarts relatifs de phase après compensation du retard relatif.

Après l'étape 206, on obtient, pour chaque voie k relativement à la voie de référence, les écarts suivants : un retard relatif $\tau_{k,1}$, un gain relatif $G_{k/1}(f)$ dépendant de la fréquence, une phase relative $d\varphi_{k/1}(f)$ dépendante de la fréquence.

Les étapes 203-206 sont réalisées, soit par un moyen de calcul à bord du satellite, soit par un moyen de calcul au sol, interfacé avec la station sol ST.

Dans une dernière étape 207, des corrections sont déterminées à partir des écarts estimés pour corriger toutes les voies de traitement, sauf la voie de référence, afin d'appairer toutes les voies sur la voie de référence.

Le gain correctif relatif à appliquer à une voie par rapport à la voie de référence est déterminé à partir des modules des gains complexes relatifs déterminés pour l'ensemble des fréquences porteuses. Par exemple, il peut être égal à l'inverse de la moyenne des modules si le gain est invariant en fréquence. Alternativement, au lieu de déterminer un gain relatif correctif unique à appliquer à chaque voie, il est aussi possible de conserver les valeurs des gains correctifs pour chaque fréquence et d'appliquer un filtre correctif qui dépend de la fréquence à chaque voie, ce filtre correctif ayant pour fonction d'appliquer au signal un gain correctif variable en fréquence inverse de $G_{k/1}(f)$.

Dans le cas où les étapes 203-206 sont effectuées par une station sol ST, les corrections relatives sont transmises au satellite via une liaison numérique protégée.

Les corrections relatives sont appliquées sur chaque voie, sauf la voie de référence, au sein de l'ensemble de circuits intégrés numériques PN via des circuits de correction $COR_1,COR_2$. Un circuit de correction est réalisé au moyen d'un ou plusieurs filtres numériques configurés pour corriger les signaux numériques en gain et en phase, à partir des gains relatifs correctifs et écarts de phases relatifs correctifs. Ces mêmes filtres numériques peuvent servir à interpoler le signal pour réaliser une correction de type retard avec une valeur de retard inférieure à la période d'échantillonnage. Un circuit de correction est aussi réalisé au moyen d'une ou plusieurs ligne(s) à retard ou registre à décalage de type FIFO pour corriger le retard numérique de chaque voie par rapport à la voie de référence, avec une granularité égale à la période d'échantillonnage. La figure 1 donne une représentation purement schématique de l'implémentation de l'ensemble de circuits intégrés numériques PN Dans une implémentation réelle, l'agencement et le nombre de circuits de corrections peut être différent de ce qui est représenté à la figure 1.

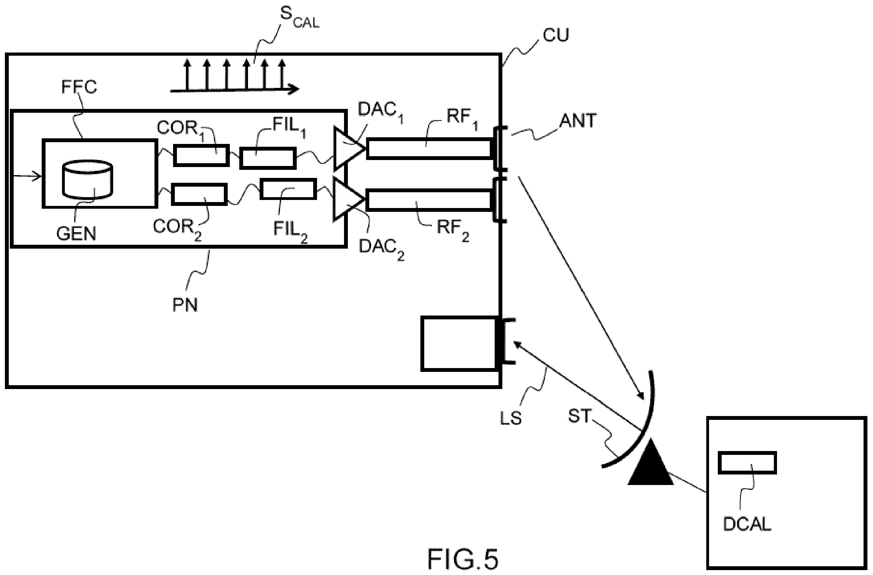

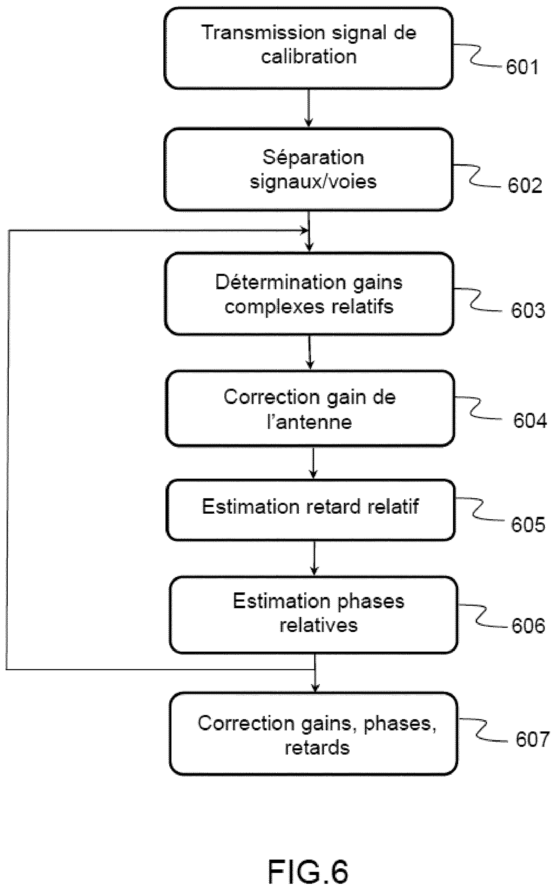

Les figures 5 et 6 illustrent la mise en oeuvre d'un système et d'un procédé de calibration d'une charge utile d'un satellite en orbite selon un second mode de réalisation de l'invention pour lequel l'antenne du satellite fonctionne en émission.

La figure 5 représente schématiquement un système de calibration selon le second mode de réalisation de l'invention. La calibration porte sur une charge utile CU de satellite en orbite, fonctionnant au moins en émission, c'est-à-dire en émission d'un signal vers une station sol ST. La charge utile CU comprend des éléments similaires à celle décrite à la figure 1, autrement dit, un ensemble de circuits intégrés numériques PN et plusieurs voies de traitement correspondant à plusieurs éléments antennaires d'une antenne ANT fonctionnant en émission. L'ensemble de circuits intégrés numériques PN comprend, par exemple, un circuit de formation de faisceau FFC commun à toutes les voies de traitement, et un filtre numérique $FIL_1, FIL_2$ par voie de traitement. Le circuit de formation de faisceau FFC a notamment pour fonction de générer les signaux numériques à émettre avec une loi de combinaison de gain et de phase particulière pour former les faisceaux dans la direction souhaitée relativement à un repère de l'antenne, afin de transmettre les signaux utiles à une station sol ST.

En sortie de chaque voie de traitement numérique est connectée une voie de traitement analogique qui comprend un convertisseur numérique-analogique $DAC_1, DAC_2$ et une chaine radiofréquence $RF_1, RF_2$.

L'exemple de la figure 5 est donné à titre purement illustratif et non limitatif. En particulier, l'ensemble de circuits intégrés numériques PN peut présenter une architecture modulaire différente de celle de la figure 5. Par exemple, il peut comporter plusieurs séries de circuits intégrés numériques pour chaque voie ou plusieurs circuits de formation de faisceau fonctionnant en parallèle et en cascade pour des sous-groupes de voies.

Dans tous les cas d'architecture, l'ensemble de circuits intégrés numériques comprend un moyen GEN pour générer des signaux numériques de calibration de manière synchrone pour toutes les voies, dans le premier circuit intégré numérique commençant le traitement de formation de faisceau en émission, ou sur une section d'un ensemble de circuits fonctionnant de manière cohérente, cet ensemble de circuits incluant le premier circuit commençant la formation de faisceau. Sur l'exemple de la figure 5, le premier circuit intégré numérique est l'unique circuit de formation de faisceaux FFC. Le moyen GEN peut consister en une mémoire dans laquelle sont sauvegardés des signaux de calibration définis au préalable.

Le procédé de calibration d'une charge utile CU de satellite fonctionnant en émission vers le sol est détaillé sur l'organigramme de la figure 6.

Dans une première étape 601, le signal de calibration est généré numériquement de manière synchrone pour toutes les voies, relativement à l'entrée de la fonction formation de faisceau en émission, dans l'ensemble de circuits intégrés numériques PN, puis transmis, via les voies de traitements de la charge utile CU et l'antenne ANT vers la station sol ST. Le signal de calibration $S_{CAL}$ est similaire à celui décrit pour le procédé de la figure 2, c'est-à-dire un signal comprenant plusieurs porteuses fréquentielles, modulées par un signal prédéfini ou non modulées, réparties dans la bande utile. L'écart de fréquence entre deux porteuses adjacentes du signal $S_{CAL}$ est inférieur à un seuil $\Delta f$ lié au retard relatif maximal entre les voies, de la même manière que pour le cas en réception. Pour un retard relatif maximum $\Delta \tau$, le seuil $\Delta f$ est celui donné par la relation [Math.1] introduite précédemment.

Lorsque la station sol ST reçoit le signal, elle réalise au préalable une étape 602 de séparation des signaux émis sur les différentes voies d'émission de la charge utile CU. Cette étape 602 sera décrite plus en détail par la suite.

A l'issue de l'étape 602, la station sol dispose d'un ensemble de séquences temporelles numériques du signal de calibration correspondant à la réception des différents signaux émis sur les différentes voies d'émission simultanément.

Les étapes 603-607 du procédé de calibration sont ensuite identiques aux étapes 203-207 décrites à la figure 2. Elles sont exécutées par un dispositif de calibration numérique DCAL présent dans la station sol pour déterminer les corrections relatives pour chaque voie d'émission de la charge utile, ces corrections étant ensuite appliquées dans l'ensemble de circuits intégrés numériques au moyen de circuits de correction $COR_1, COR_2$. Les corrections sont transmises au satellite via une liaison sécurisée LS.

On décrit à présent l'étape 602 de séparation des signaux émis sur les différentes voies d'émission de la charge utile CU.

Pour pouvoir appliquer les étapes 603-606 d'estimation des écarts entre chaque voie et une voie de référence, il faut au préalable pouvoir séparer les signaux émis sur les différentes voies d'émission à partir du signal reçu par la station sol ST qui résulte de la combinaison ou superposition des signaux émis sur les différentes voies.

Les solutions connues relèvent des techniques d'accès multiple, de type CDMA en utilisant des codes orthogonaux ou des séquences PN quasi-orthogonales, ou de type TDMA avec des transmissions séquentielles.

Une première solution, de type CDMA synchrone, pour réaliser l'étape 602 consiste à moduler chaque porteuse du signal numérique de calibration dans l'ensemble de circuits intégrés numériques PN avec des codes d'étalement orthogonaux, par exemple de type Walsh-Hadamard, différents pour chaque voie de traitement. Ainsi, chaque élément antennaire émet un signal avec un code d'étalement différent. A réception du signal au sol, une étape de dés-étalement avec une réplique locale de chacun des codes d'étalement utilisés en émission permet de retrouver les signaux émis sur les différentes voies d'émission.

Un inconvénient de cette méthode est que les différentes voies de traitement de la charge utile CU ne sont pas rigoureusement synchrones puisqu'elles peuvent introduire, notamment, des retards différents. Ainsi, l'orthogonalité des codes n'est plus garantie au niveau de l'émission et donc de la réception. La séparation des signaux au sol sera dégradée du fait des interférences par les autres signaux codés.

Une autre solution, de type CDMA asynchrone, consiste à moduler chaque porteuse du signal de calibration par des séquences pseudo aléatoires PN, qui permettent un niveau intermédiaire d'orthogonalité, sans contrainte de synchronisation. Cette solution est moins sensible aux problèmes de synchronisation mais engendre toujours un brouillage entre signaux.

Ainsi, les deux solutions de type CDMA synchrone ou asynchrone pour la séparation de signaux présentent des performances dégradées.

Une autre solution, de type TDMA, consiste à émettre des signaux de calibration sur chaque voie d'émission durant des intervalles temporels successifs. Ainsi, la séparation des signaux est réalisée temporellement. Cependant, cette solution présente l'inconvénient de comparer des signaux générés sur des intervalles temporels différents pendant lesquels les conditions de propagation sur la liaison descendante entre le satellite et la station sol sont susceptibles d'évoluer. De plus, toute mesure de phase nécessite un signal de référence de même fréquence que le signal mesuré. Les techniques classiques pour générer un signal de référence de même fréquence consistent soit à estimer la fréquence et à synthétiser cette fréquence, soit à verrouiller une boucle à verrouillage de phase (PLL) sur le signal reçu à mesurer. Toute erreur au niveau de l'estimation de la fréquence, de la synthèse de fréquence, ou de la dérive de la boucle PLL en l'absence d'un signal pilote, conduit à une dérive de phase du signal de référence, ce qui dégrade la précision des mesures de phase. Ce type de solution TDMA pour séparer les signaux n'est pas assez précis.

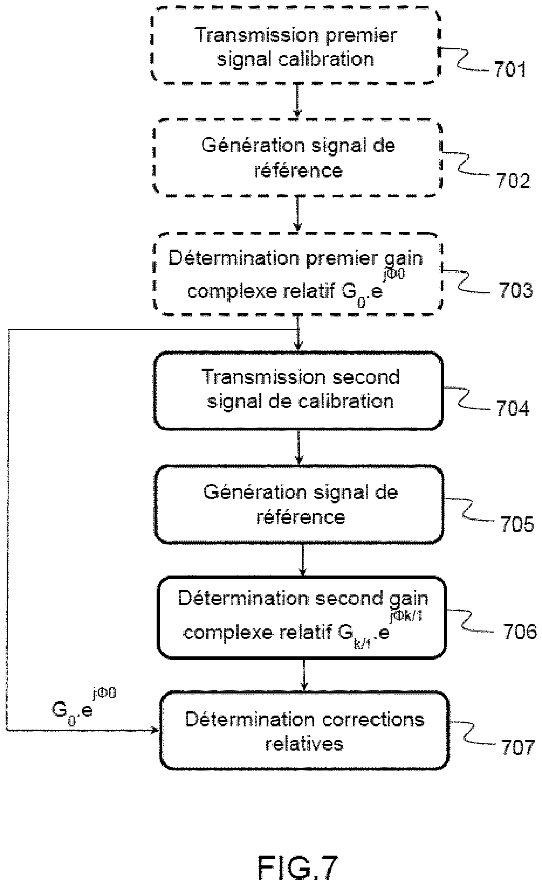

Une autre solution est proposée pour réaliser l'étape 602. Elle est décrite à l'appui des figures 7 à 10.

Cette solution est basée sur la génération de signaux auxiliaires en plus du signal de calibration, de sorte à pouvoir générer au sol un signal de référence, à partir des signaux auxiliaires, sur rigoureusement la même fréquence que le signal de calibration.

La figure 7 représente, sur un organigramme, les principales étapes de mise en oeuvre de l'étape 602 de séparation de signaux.

Dans cette variante de réalisation de l'invention, on considère toujours que le signal de calibration est constitué de plusieurs porteuses fréquentielles réparties dans la bande utile. Par ailleurs, on génère, deux signaux auxiliaires dont un à partir du signal de calibration.

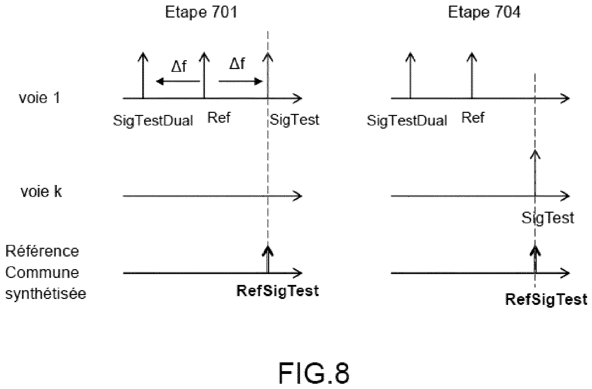

La génération des signaux auxiliaires est représentée sur la figure 8. Dans une première variante, chacun des deux signaux auxiliaires est constitué d'autant de porteuses fréquentielles que le signal de calibration, chacune des porteuses d'un signal auxiliaire étant déterminée à partir d'une porteuse respective du signal de calibration. Dans une seconde variante, chacun des deux signaux auxiliaires est constitué d'un ensemble de porteuses éventuellement réduit à une porteuse. Les porteuses du signal de calibration et des deux signaux auxiliaires ne se chevauchent pas, afin de pouvoir être extraites séparément par filtrage par la station sol ST.

Sur la figure 8, on a représenté schématiquement une porteuse SigTest du signal de calibration et deux porteuses Ref,SigTestDual correspondantes dans les deux signaux auxiliaires. L'espacement de fréquence entre les porteuses Ref, SigTestDual des deux signaux auxiliaires est identique à l'espacement entre la porteuse Ref et la porteuse SigTest du signal de calibration.

Sans sortir du cadre de l'invention, d'autres signaux auxiliaires peuvent être générés à la place des deux signaux auxiliaires décrits à la figure 8. La relation générale qui lie les fréquences porteuses correspondantes des deux signaux auxiliaires et du signal de calibration est : $N.F_{SigTestDual}=M.F_{Ref} + P.F_{SigTest}$, avec $F_{SigTest}$ la fréquence porteuse du signal de calibration et $F_{SigTestDual}$, $F_{ref}$ les fréquences porteuses des signaux auxiliaires. N,M et P sont des entiers relatifs. L'invention peut aussi être généralisée à plus de deux signaux auxiliaires.

Un cas particulier de la relation ci-dessus permet d'éviter de générer des produits d'intermodulation sur la fréquence du signal de calibration, du fait des non-linéarités d'un amplificateur par exemple. Ce cas particulier concerne une valeur de P paire et des valeurs de N et M impaires.

Les signaux auxiliaires sont générés dans l'ensemble de circuits intégrés numériques avec le signal de calibration ou sont précalculés et sauvegardés dans une mémoire avec le signal de calibration.

Dans une première étape 701, les deux signaux auxiliaires et le signal de calibration sont transmis uniquement sur la voie de référence de la charge utile. Ils sont reçus par la station sol qui réalise une opération de filtrage afin de séparer les trois porteuses respectives des trois signaux. Les étapes suivantes sont itérées pour toutes les porteuses du signal de calibration, séquentiellement ou en parallèle Autrement dit, pour chaque porteuse du signal de calibration, on récupère, par filtrage, les porteuses correspondantes des deux signaux auxiliaires.

Ensuite, pour chaque porteuse du signal de calibration, la station sol ST génère, dans une étape 702, un signal de référence RefSigTest à la même fréquence que la porteuse du signal de calibration reçu SigTest, à partir des signaux auxiliaires reçus SigTestDual et Ref. En effet, un des deux signaux auxiliaires ayant été généré à partir du signal de calibration et de l'autre signal auxiliaire, il est possible, en réception, de générer un signal à la même fréquence que le signal de calibration à partir des deux signaux auxiliaires, par des traitements de filtrage, mélange, multiplication et division de fréquence.

Ensuite, la station sol détermine 703 un premier gain complexe relatif $G_{1/ret1}.e^{j\varphi 1/ref1}$ entre le signal de calibration reçu SigTest et le signal de référence généré au sol RefSigTest de même fréquence. Le gain complexe relatif est obtenu en calculant l'intercorrélation entre les deux signaux de la façon déjà décrite pour l'étape 203.

Ce gain complexe relatif $G_{1/ref1}.e^{j\varphi 1/ref1}$ porte les écarts de gain et phase engendrés par la chaine de référence de la charge utile sur les fréquences des signaux auxiliaires et sur la fréquence du signal de calibration. En effet, le comportement des chaines radiofréquences analogiques n'est pas identique pour toutes les fréquences.

Dans une variante de réalisation, les étapes précitées 701-703 sont rendues optionnelles si on néglige l'effet des chaines radiofréquences analogiques en fonction de la fréquence.

Ensuite, dans une nouvelle étape 704, la charge utile émet simultanément, dans un nouvel intervalle temporel, le signal de calibration SigTest sur une voie k autre que la voie de référence et les signaux auxiliaires SigTestDual et Ref sur la voie de référence.

La station sol ST génère 705 le signal de référence RefSigTest à partir des deux signaux auxiliaires reçus SigTestDual et Ref.

On détermine ensuite 706 un second gain complexe relatif $G_{k/ref1}.e^{j\varphi k/ref1}$ entre le signal de calibration reçu SigTest et le signal de référence généré au sol RefSigTest toujours en calculant l'intercorrélation entre les deux signaux.

Le second gain complexe relatif comporte les contributions en gain et en phase de la voie k par rapport à la voie de référence, mais sur d'autres fréquences, puisque le signal de référence est généré à partir de signaux auxiliaires transmis sur la voie de référence. Les deux signaux auxiliaires subissent les mêmes conditions de propagation que le signal de calibration. L'effet des conditions de propagation sur la liaison descendante entre le satellite et le sol est naturellement compensé en calculant l'intercorrélation entre le signal de calibration reçu SigTest et le signal de référence généré au sol RefSigTest qui sont affectés de la même manière par les conditions de propagation, réalisant ainsi une mesure relative.

Dans une dernière étape 707, on détermine le gain complexe relatif introduit à l'étape 603 du procédé de calibration en effectuant le rapport du premier et du second gain complexes déterminés aux étapes 703 et 706 afin de corriger les effets des chaines radiofréquences analogiques sur les signaux auxiliaires. Si l'étape 703 n'est pas effectuée, le gain complexe relatif final de l'étape 603 est égal au second gain $G_{k/ref1}.e^{j\varphi k/ref1}$.

Les étapes 701 à 707 sont effectuées pour toutes les fréquences du signal de calibration.

Les étapes 704-707 sont itérées pour toutes les voies de traitement autre que la voie de référence, c'est-à-dire en faisant varier, à chaque itération, l'indice k de la voie sur laquelle est transmis le signal de calibration à l'étape 704.

La méthode décrite aux figures 7 et 8 présente l'avantage de permettre une comparaison entre un signal de calibration transmis sur une voie d'émission k et un signal de référence rigoureusement de même fréquence généré au sol à partir de la réception de signaux auxiliaires transmis sur une voie de référence sur des fréquences distinctes. De cette façon, il est possible de comparer des signaux à la même fréquence sans qu'ils soient transmis simultanément, ce qui ne serait pas possible sans un brouillage mutuel.

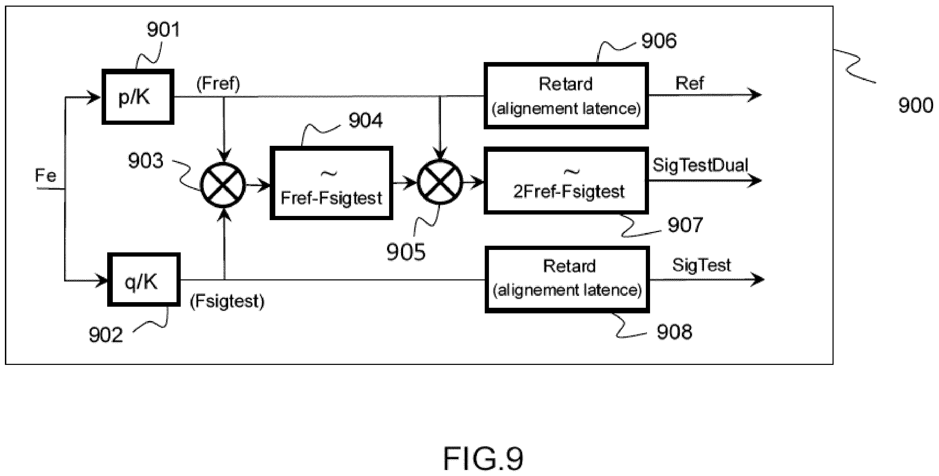

La figure 9 décrit, sur un schéma, un exemple de dispositif pour générer le signal auxiliaire SigTestDual à partir d'un signal auxiliaire Ref et du signal de calibration SigTest.

Le dispositif 900 de la figure 9 génère à partir d'un signal à une fréquence d'horloge Fe et de deux multiplieurs fractionnaires fréquentiels 901,902, le signal de calibration SigTest et le premier signal auxiliaire Ref. Un mélangeur 903 suivi d'un filtre 904 permet de générer un signal battement à la différence $F_{ref} - F_{sigtest}$ des fréquences respectives des deux signaux précités. Ce battement différence est mélangé avec le premier signal auxiliaire Ref via un second mélangeur 905 suivi d'un filtre 907, pour générer un battement somme correspondant au signal SigTestDual à la fréquence $2F_{ref} - F_{sigtest}$. Le dispositif 900 comprend en outre des lignes à retard ou registres à décalage 906,908 pour aligner les latences de génération des signaux auxiliaires Ref,SigTestDual et du signal de calibration SigTest en sortie du dispositif 900.

Le dispositif 900 peut être implémenté dans l'ensemble de circuits intégrés numériques PN de la charge utile CU ou il peut être utilisé au sol pour générer les signaux qui sont ensuite tabulés dans des mémoires programmables à bord de la charge utile.

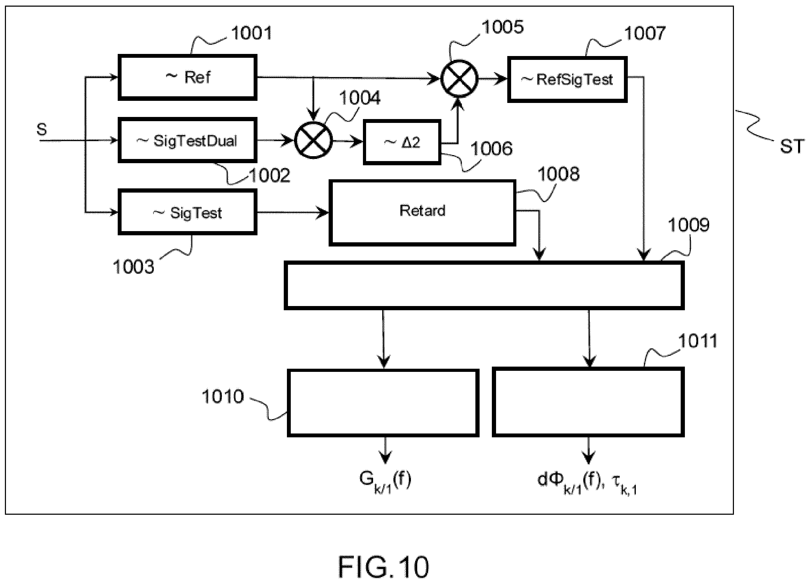

La figure 10 schématise un exemple de réalisation du traitement réalisé dans la station sol ST et illustré à la figure 7.

La station sol ST comprend plusieurs bancs de filtres 1001,1002,1003 configurés pour filtrer le signal reçu S autour des fréquences respectives des signaux auxiliaires Ref et SigTestDual et du signal de calibration SigTest.

Le signal de référence RefSigTest est dérivé à partir des deux signaux auxiliaires filtrés Ref et SigTestDual, de deux mélangeurs 1004,1005, d'un filtre 1006 à la fréquence du battement différence entre les deux signaux auxiliaires et d'un autre filtre 1007 à la fréquence du signal de calibration SigTest.

Une ligne à retard ou registre à décalage 1008 permet d'aligner la latence d'extraction du signal de calibration SigTest avec la latence de génération du signal de référence RefSigTest pour ensuite les comparer au moyen d'un estimateur de gain complexe 1009 configuré pour réaliser les étapes 703 et 706 de détermination des gains complexes relatifs par corrélation

Enfin, un ou plusieurs modules 1010,1011 sont configurés pour déterminer les écarts relatifs en gain $G_{k/1}(f)$, phase $d\varphi_{k/1}(f)$, et retard $\tau_{k,1}$ à partir des gains complexes calculés par le module 1009.

Ces écarts estimés au sol permettent de déterminer des corrections en gain, en phase et en retard, qui sont transmises à la charge utile via une liaison numérique protégée.

Les corrections sont réalisées au sein de l'ensemble de circuits intégrés numériques PN.

**Revendications**

1. Système de calibration d'une charge utile d'un satellite, le système comprenant la charge utile (CU) comprenant un récepteur multi-voies comprenant une antenne (ANT) par voie, une chaine de traitement analogique ($RF_1, RF_2$) par voie et un ensemble de circuits intégrés numériques (PN), le système comprenant en outre une station sol (ST) configurée pour transmettre (201) un signal de calibration comprenant une pluralité de fréquences, le système comprenant en outre un dispositif de calibration (DCAL) implémenté dans la charge utile (CU), ou dans la station sol (ST), le dispositif de calibration (DCAL) étant configuré pour :

   • Acquérir (202) pour toutes les voies du récepteur, le signal de calibration numérisé,
   • Fixer une voie de référence et, pour chacune des autres voies,

      - déterminer (203) un gain complexe relatif entre la voie et la voie de référence, pour une pluralité de fréquences du signal de calibration,
      - corriger (204) le gain complexe relatif d'un gain relatif de l'antenne (ANT) de la charge utile (CU) entre la voie et la voie de référence,
      - estimer (205), à partir de la phase du gain complexe relatif évaluée pour un ensemble de fréquences, un retard relatif de propagation du signal de calibration,
      - estimer (206), à partir de la phase du gain complexe relatif évaluée pour un ensemble de fréquences et du retard relatif, un écart de phase relatif pour l'ensemble de fréquences,
      - fournir (207) une correction de gain, d'écart de phase et de retard relatifs de la voie par rapport à la voie de référence pour un ensemble de fréquences.

2. Système de calibration d'une charge utile d'un satellite, le système comprenant la charge utile (CU) comprenant un émetteur multi-voies comprenant une antenne (ANT) par voie, une chaine de traitement analogique ($RF_1, RF_2$) par voie et un ensemble de circuits intégrés numériques (PN), la charge utile (CU) étant configurée pour transmettre (601) un signal de calibration comprenant une pluralité de fréquences, le système comprenant en outre une station sol (ST), le système comprenant en outre un dispositif de calibration (DCAL) implémenté dans la station sol (ST), le dispositif de calibration (DCAL) étant configuré pour :

   • Séparer (602) le signal de calibration reçu au sol en plusieurs voies correspondant aux voies d'émission de la charge utile (CU),
   • Acquérir (602) pour toutes les voies de l'émetteur, le signal de calibration numérisé,
   • Fixer une voie de référence et, pour chacune des autres voies,

      - déterminer (603) un gain complexe relatif entre la voie et la voie de référence, pour une pluralité de fréquences du signal de calibration,
      - corriger (604) le gain complexe relatif d'un gain relatif de l'antenne (ANT) de la charge utile (CU) entre la voie et la voie de référence,
      - estimer (605), à partir de la phase du gain complexe relatif évaluée pour un ensemble de fréquences, un retard relatif de propagation du signal de calibration,
      - estimer (606), à partir de la phase du gain complexe relatif évaluée pour un ensemble de fréquences et du retard relatif, un écart de phase relatif pour l'ensemble de fréquences,
      - fournir (607) une correction de gain, d'écart de phase et de retard relatifs de la voie par rapport à la voie de référence pour un ensemble de fréquences.

3. Système de calibration selon la revendication 1 dans lequel le dispositif de calibration (DCAL) est configuré pour recevoir, pour chaque voie de réception, une séquence temporelle numérisée du signal de calibration reçu par la charge utile (CU), la séquence étant prélevée dans l'ensemble de circuits intégrés numériques (PN) sur l'ensemble des voies, la séquence étant prélevée sur un même intervalle temporel pour au moins un sous-ensemble des voies.

**4.** Système de calibration selon la revendication 3 dans lequel le dispositif de calibration (DCAL) est implémenté dans la station sol (ST), la charge utile (CU) étant configurée pour recevoir le tm- signal de calibration, l'ensemble de circuits intégrés numériques (PN) étant configuré pour prélever, pour chaque voie, la séquence temporelle numérique du signal de calibration et corriger le gain, la phase et le retard relatifs de la voie par rapport à la voie de référence.

**5.** Système de calibration selon la revendication 4 dans lequel l'ensemble de circuits intégrés numériques (PN) comprend un sous-ensemble de circuits intégrés numériques (FIL$_1$, FIL$_2$, FFC) réalisant une fonction de formation de faisceaux pour au moins une partie des voies, l'ensemble de circuits intégrés numériques (PN) étant configuré pour prélever la séquence temporelle numérique du signal de calibration dans le dernier circuit intégré numérique (FFC) du sous-ensemble dans le sens de propagation du signal.

**6.** Système de calibration selon la revendication 2 dans lequel la charge utile est configurée pour

• Générer le signal de calibration dans l'ensemble de circuits intégrés numériques (PN),
• Emettre (601) le signal de calibration depuis le satellite vers la station sol (ST),
• Corriger (607), dans l'ensemble de circuits intégrés numériques (PN), le gain, la phase et le retard relatifs de la voie par rapport à la voie de référence.

**7.** Système de calibration selon la revendication 6 dans lequel l'ensemble de circuits intégrés numériques comprend un sous-ensemble de circuits numériques (FFC, FIL$_1$, FIL$_2$) réalisant une fonction de formation de faisceaux pour au moins une partie des voies, l'ensemble de circuits intégrés numériques (PN) étant configuré pour générer le signal de calibration dans le premier circuit intégré numérique (FFC) du sous-ensemble dans le sens de propagation du signal.

**8.** Système de calibration selon l'une des revendications 6 à 7 dans lequel :

• la charge utile (CU) est en outre configurée pour générer au moins deux signaux auxiliaires (Ref, SigTestDual) comprenant chacun au moins une porteuse fréquentielle différente des fréquences du signal de calibration (SigTest) et différente des fréquences des autres signaux auxiliaires, un signal auxiliaire (SigTestDual) étant généré à partir du signal de calibration (SigTest) et d'un autre signal auxiliaire (Ref),
• le dispositif de calibration (DCAL) est configuré pour :
• pour chaque voie autre que la voie de référence, recevoir les au moins deux signaux auxiliaires (Ref, SigTestDual) émis sur la voie de référence et le signal de calibration émis sur la voie (SigTest), générer un signal de référence (RefSigTest) de fréquences identiques aux fréquences du signal de calibration (SigTest), le signal de référence étant généré à partir des au moins deux signaux auxiliaires reçus (Ref,SigTestDual) et déterminer un gain complexe relatif ($G_{k/ref1}.e^{j\varphi k/ref1}$) entre le signal de calibration reçu (SigTest) et le signal de référence (RefSigTest).

**9.** Système de calibration selon la revendication 8 dans lequel le dispositif de calibration (DCAL) est en outre configuré pour, dans une étape préalable:

• Recevoir les au moins deux signaux auxiliaires (Ref,SigTestDual) et le signal de calibration (SigTest) émis sur la voie de référence,
• générer un premier signal de référence (RefSigTest) de fréquences identiques aux fréquences du signal de calibration (SigTest), le signal de référence étant généré à partir des au moins deux signaux auxiliaires reçus (Ref,SigTestDual),
• déterminer un gain complexe relatif correctif ($G_{1/ret1}.e^{j\varphi 1/ref1}$) entre le signal de calibration (SigTest) reçu à l'étape préalable et le premier signal de référence (RefSigTest),
• Pour chaque voie autre que la voie de référence, corriger le gain complexe relatif à partir du gain complexe relatif correctif ($G_{1/ref1}.e^{j\varphi 1/ref1}$).

**10.** Système de calibration selon l'une des revendications 1 à 9 dans lequel le signal de calibration est composé d'une pluralité de porteuses fréquentielles.

**Patentansprüche**

**1.** System zur Kalibrierung einer Nutzlast eines Satelliten, wobei das System die Nutzlast (CU) umfasst, die einen Mehrkanalempfänger umfasst, der eine Antenne (ANT) pro Kanal, eine analoge Verarbeitungskette (RF$_1$, RF$_2$) pro Kanal und einen Satz von digitalen integrierten Schaltungen (PN) umfasst, wobei das System ferner eine Bodenstation (ST) umfasst, die konfiguriert ist, um ein Kalibrierungssignal zu übertragen (201), das eine Vielzahl von Frequenzen umfasst,

wobei das System ferner eine Kalibrierungsvorrichtung (DCAL) umfasst, die in der Nutzlast (CU) oder in der Bodenstation (ST) implementiert ist, wobei die Kalibrierungsvorrichtung (DCAL) konfiguriert ist zu Folgendem:

• Erfassen (202) des digitalisierten Kalibrierungssignals für alle Kanäle des Empfängers,
• Festlegen eines Referenzkanals und, für jeden der anderen Kanäle,
- Bestimmen (203) einer relativen komplexen Verstärkung zwischen dem Kanal und dem Referenzkanal, für eine Vielzahl von Frequenzen des Kalibrierungssignals,
- Korrigieren (204) der relativen komplexen Verstärkung einer relativen Verstärkung der Antenne (ANT) der Nutzlast (CU) zwischen dem Kanal und dem Referenzkanal,
- Schätzen (205) einer relativen Ausbreitungsverzögerung des Kalibrierungssignals aus der für einen Satz von Frequenzen ausgewerteten Phase der relativen komplexen Verstärkung,
- Schätzen (206) einer relativen Phasenabweichung für den Satz von Frequenzen aus der für einen Satz von Frequenzen ausgewerteten Phase der relativen komplexen Verstärkung und der relativen Verzögerung,
- Bereitstellen (207) einer Korrektur der relativen Verstärkung, Phasenabweichung und Verzögerung des Kanals in Bezug auf den Referenzkanal für einen Satz von Frequenzen.

2. System zur Kalibrierung einer Nutzlast eines Satelliten, wobei das System die Nutzlast (CU) umfasst, die einen Mehrkanalsender umfasst, der eine Antenne (ANT) pro Kanal, eine analoge Verarbeitungskette (RF$_1$, RF$_2$) pro Kanal und einen Satz von digitalen integrierten Schaltungen (PN) umfasst, wobei die Nutzlast (CU) konfiguriert ist, um ein Kalibrierungssignal zu übertragen (601), das eine Vielzahl von Frequenzen umfasst, wobei das System ferner eine Bodenstation (ST) umfasst,
wobei das System ferner eine Kalibrierungsvorrichtung (DCAL) umfasst, die in der Bodenstation (ST) implementiert ist, wobei die Kalibrierungsvorrichtung (DCAL) konfiguriert ist zu Folgendem:

• Trennen (602) des am Boden empfangenen Kalibrierungssignals in mehrere Kanäle, die den Sendekanälen der Nutzlast (CU) entsprechen,
• Erfassen (602) des digitalisierten Kalibrierungssignals für alle Kanäle des Senders,
• Festlegen eines Referenzkanals und, für jeden der anderen Kanäle,
- Bestimmen (603) einer relativen komplexen Verstärkung zwischen dem Kanal und dem Referenzkanal, für eine Vielzahl von Frequenzen des Kalibrierungssignals,
- Korrigieren (604) der relativen komplexen Verstärkung einer relativen Verstärkung der Antenne (ANT) der Nutzlast (CU) zwischen dem Kanal und dem Referenzkanal,
- Schätzen (605) einer relativen Ausbreitungsverzögerung des Kalibrierungssignals aus der für einen Satz von Frequenzen ausgewerteten Phase der relativen komplexen Verstärkung,
- Schätzen (606) einer relativen Phasenabweichung für den Satz von Frequenzen aus der für einen Satz von Frequenzen ausgewerteten Phase der relativen komplexen Verstärkung und der relativen Verzögerung,
- Bereitstellen (607) einer Korrektur der relativen Verstärkung, Phasenabweichung und Verzögerung des Kanals in Bezug auf den Referenzkanal für einen Satz von Frequenzen.

3. Kalibrierungssystem nach Anspruch 1, wobei die Kalibrierungsvorrichtung (DCAL) so konfiguriert ist, dass sie für jeden Empfangskanal eine digitalisierte Zeitsequenz des von der Nutzlast (CU) empfangenen Kalibrierungssignals empfängt,
wobei die Sequenz aus dem Satz von digitalen integrierten Schaltungen (PN) über alle Kanäle hinweg abgegriffen wird, wobei die Sequenz für mindestens eine Teilmenge der Kanäle aus einem gleichen Zeitintervall abgegriffen wird.

4. Kalibrierungssystem nach Anspruch 3, wobei die Kalibrierungsvorrichtung (DCAL) in der Bodenstation (ST) implementiert ist, wobei die Nutzlast (CU) so konfiguriert ist, dass sie das Kalibrierungssignal empfängt, wobei der Satz von digitalen integrierten Schaltungen (PN) so konfiguriert ist, dass er für jeden Kanal die digitale Zeitsequenz des Kalibrierungssignals abgreift und die relative Verstärkung, Phase und Verzögerung des Kanals in Bezug auf den Referenzkanal korrigiert.

5. Kalibrierungssystem nach Anspruch 4, wobei der Satz von digitalen integrierten Schaltungen (PN) eine Teilmenge digitaler integrierter Schaltungen (FIL$_1$, FIL$_2$, FFC) umfasst, die eine Strahlbildungsfunktion für mindestens einen Teil der Kanäle durchführt, wobei der Satz digitaler integrierter Schaltungen (PN) so konfiguriert ist, dass er die digitale Zeitsequenz des Kalibrierungssignals in der letzten digitalen integrierten Schaltung (FFC) der Teilmenge in der Ausbreitungsrichtung des Signals abgreift.

6. Kalibrierungssystem nach Anspruch 2, wobei die Nutzlast konfiguriert ist zu Folgendem:

• Erzeugen des Kalibrierungssignals in dem Satz von digitalen integrierten Schaltungen (PN),
• Senden (601) des Kalibrierungssignals vom Satelliten an die Bodenstation (ST),
• Korrigieren (607), in dem Satz von digitalen integrierten Schaltungen (PN), der relativen Verstärkung, Phase und Verzögerung des Kanals in Bezug auf den Referenzkanal.

7. Kalibrierungssystem nach Anspruch 6, wobei der Satz von digitalen integrierten Schaltungen eine Teilmenge digitaler Schaltungen (FFC, $FIL_1$, $FIL_2$) umfasst, die eine Strahlbildungsfunktion für mindestens einen Teil der Kanäle durchführt, wobei der Satz von digitalen integrierten Schaltungen (PN) so konfiguriert ist, dass er das Kalibrierungssignal in der ersten digitalen integrierten Schaltung (FFC) der Teilmenge in der Ausbreitungsrichtung des Signals erzeugt.

8. Kalibrierungssystem nach einem der Ansprüche 6 bis 7, wobei:

• die Nutzlast (CU) ferner konfiguriert ist, um mindestens zwei Hilfssignale (Ref, SigTestDual) zu erzeugen, die jeweils mindestens einen Frequenzträger umfassen, der sich von den Frequenzen des Kalibrierungssignals (SigTest) unterscheidet und sich von den Frequenzen der anderen Hilfssignale unterscheidet, wobei ein Hilfssignal (SigTestDual) aus dem Kalibrierungssignal (SigTest) und einem anderen Hilfssignal (Ref) erzeugt wird,
• die Kalibrierungsvorrichtung (DCAL) konfiguriert ist zu Folgendem:
• Empfangen, für jeden anderen Kanal als den Referenzkanal, der mindestens zwei auf dem Referenzkanal gesendeten Hilfssignale (Ref, SigTestDual) und des auf dem Kanal (SigTest) gesendeten Kalibrierungssignals, Erzeugen eines Referenzsignals (RefSigTest) mit Frequenzen, die mit den Frequenzen des Kalibrierungssignals (SigTest) identisch sind, wobei das Referenzsignal aus den mindestens zwei empfangenen Hilfssignalen (Ref, SigTestDual) erzeugt wird, und Bestimmen einer relativen komplexen Verstärkung ($G_{k/ref1} \cdot e^{j\varphi k/ref1}$) zwischen dem empfangenen Kalibrierungssignal (SigTest) und dem Referenzsignal (RefSigTest).

9. Kalibrierungssystem nach Anspruch 8, wobei die Kalibrierungsvorrichtung (DCAL) ferner, in einem vorhergehenden Schritt, konfiguriert ist zu Folgendem:

• Empfangen der mindestens zwei Hilfssignale (Ref, SigTestDual) und des auf dem Referenzkanal gesendeten Kalibrierungssignals (SigTest),
• Erzeugen eines ersten Referenzsignals (RefSigTest) mit Frequenzen, die mit den Frequenzen des Kalibrierungssignals (SigTest) identisch sind, wobei das Referenzsignal aus den mindestens zwei empfangenen Hilfssignalen (Ref, SigTestDual) erzeugt wird,
• Bestimmen einer korrigierenden relativen komplexen Verstärkung ($G_{k/ref1} \cdot e^{j\varphi k/ref1}$) zwischen dem im vorhergehenden Schritt empfangenen Kalibrierungssignal (SigTest) und dem ersten Referenzsignal (RefSigTest),
• für jeden Kanal, der nicht der Referenzkanal ist, Korrigieren der relativen komplexen Verstärkung anhand der korrigierenden relativen komplexen Verstärkung($G_{k/ref1} \cdot e^{j\varphi k/ref1}$).

10. Kalibrierungssystem nach einem der Ansprüche 1 bis 9, wobei das Kalibrierungssignal aus einer Vielzahl von Frequenzträgern besteht.

**Claims**

1. A system for calibrating a payload of a satellite, the system comprising the payload (CU) comprising a multichannel receiver comprising one antenna (ANT) per channel, one analogue processing chain ($RF_1$, $RF_2$) per channel and a set of digital integrated circuits (PN), the system further comprising a ground station (ST) configured to transmit (201) a calibration signal comprising a plurality of frequencies, the system further comprising a calibration device (DCAL) implemented in the payload (CU) or in the ground station (ST), the calibration device (DCAL) being configured to:

• acquire (202) for all the channels of the receiver, the digitised calibration signal,
• set a reference channel and, for each of the other channels,
- determine (203) a relative complex gain between the channel and the reference channel, for a plurality of frequencies of the calibration signal,
- correct (204) the relative complex gain of a relative gain of the antenna (ANT) of the payload (CU) between the channel and the reference channel,
- estimate (205), from the phase of the relative complex gain, which phase is evaluated for a set of frequencies, a relative propagation delay of the calibration signal,
- estimate (206), from the phase of the relative complex gain, which phase is evaluated for a set of frequencies, and from the relative delay, a relative phase difference for the set of frequencies,
- provide (207) a correction of the relative gain, phase difference and delay of the channel with respect to the reference channel for a set of frequencies.

2. A system for calibrating a payload of a satellite, the system comprising the payload (CU) comprising a multichannel transmitter comprising one antenna (ANT) per channel, one analogue processing chain ($RF_1$, $RF_2$) per channel and a set of digital integrated circuits (PN), the payload (CU) being configured to transmit (601) a calibration signal comprising a plurality of frequencies, the system further comprising a ground station (ST),
the system further comprising a calibration device (DCAL) implemented in the ground station (ST), the calibration device (DCAL) being configured to:

 • separate (602) the calibration signal received on the ground in multiple channels corresponding to the transmission channels of the payload (CU),
 • acquire (602) for all the channels of the transmitter, the digitised calibration signal,
 • set a reference channel and, for each of the other channels,
 - determine (603) a relative complex gain between the channel and the reference channel, for a plurality of frequencies of the calibration signal,
 - correct (604) the relative complex gain of a relative gain of the antenna (ANT) of the payload (CU) between the channel and the reference channel,
 - estimate (605), from the phase of the relative complex gain, which phase is evaluated for a set of frequencies, a relative propagation delay of the calibration signal,
 - estimate (606), from the phase of the relative complex gain, which phase is evaluated for a set of frequencies, and from the relative delay, a relative phase difference for the set of frequencies,
 - provide (607) a correction of the relative gain, phase difference and delay of the channel with respect to the reference channel for a set of frequencies.

3. The calibration system according to claim 1, wherein the calibration device (DCAL) is configured to receive, for each reception channel, a digitised time sequence of the calibration signal received by the payload (CU),
the sequence being obtained in the set of digital integrated circuits (PN) in all of the channels, the sequence being obtained in one and the same time interval for at least one subset of the channels.

4. The calibration system according to claim 3, wherein the calibration device (DCAL) is implemented in the ground station (ST), the payload (CU) being configured to receive the calibration signal, the set of digital integrated circuits (PN) being configured to obtain, for each channel, the digital time sequence of the calibration signal and to correct the relative gain, phase and delay of the channel with respect to the reference channel.

5. The calibration system according to claim 4, wherein the set of digital integrated circuits (PN) comprises a subset of digital integrated circuits ($FIL_1$, $FIL_2$, FFC) performing a beam-forming function for at least a portion of the channels, the set of digital integrated circuits (PN) being configured to obtain the digital time sequence of the calibration signal in the last digital integrated circuit (FFC) of the subset in the direction of propagation of the signal.

6. The calibration system according to claim 2, wherein the payload is configured to

 • generate the calibration signal in the set of digital integrated circuits (PN),
 • transmit (601) the calibration signal from the satellite to the ground station (ST),
 • correct (607), in the set of digital integrated circuits (PN), the relative gain, phase and delay of the channel with respect to the reference channel.

7. The calibration system according to claim 6, wherein the set of digital integrated circuits comprises a subset of digital circuits (FFC, $FIL_1$, $FIL_2$) performing a beam-forming function for at least a portion of the channels, the set of digital integrated circuits (PN) being configured to generate the calibration signal in the first digital integrated circuit (FFC) of the subset in the direction of propagation of the signal.

8. The calibration system according to one of claims 6 to 7, wherein:

- the payload (CU) is further configured to generate at least two auxiliary signals (Ref, SigTestDual) each comprising at least one frequency carrier different from the frequencies of the calibration signal (SigTest) and different from the frequencies of the other auxiliary signals, an auxiliary signal (SigTestDual) being generated from the calibration signal (SigTest) and from another auxiliary signal (Ref),
- the calibration device (DCAL) is configured to:
- for each channel other than the reference channel, receive the at least two auxiliary signals (Ref, SigTestDual) transmitted on the reference channel and the calibration signal transmitted on the channel (SigTest), generate a reference signal (RefSigTest) of frequencies identical to the frequencies of the calibration signal (SigTest), the reference signal being generated from the at least two received auxiliary signals (Ref, SigTestDual) and determine a relative complex gain ($G_{k/ref1}.e^{j\varphi k/ref1}$) between the received calibration signal (SigTest) and the reference signal (RefSigTest).

9. The calibration system according to claim 8, wherein the calibration device (DCAL) is further configured to, in a prior step:

- receive the at least two auxiliary signals (Ref, SigTestDual) and the calibration signal (SigTest) transmitted on the reference channel,
- generate a first reference signal (RefSigTest) of frequencies identical to the frequencies of the calibration signal (SigTest), the reference signal being generated from the at least two received auxiliary signals (Ref, SigTestDual),
- determine a corrective relative complex gain ($G_{1/ref1}.e^{j\varphi 1/ref1}$) between the calibration signal (SigTest) received in the prior step and the first reference signal (RefSigTest),
- for each channel other than the reference channel, correct the relative complex gain by means of the corrective relative complex gain ($G_{1/ref1}.e^{j\varphi 1/ref1}$).

10. The calibration system according to one of claims 1 to 9, wherein the calibration signal is composed of a plurality of frequency carriers.

FIG.1

Transmission signal de calibration — 201

Capture signaux numériques — 202

Détermination gains complexes relatifs — 203

Correction gain de l'antenne — 204

Estimation retard relatif — 205

Estimation phases relatives — 206

Correction gains, phases, retards — 207

FIG.2

FIG.3

FIG.4

FIG.5

EP 3 706 238 B1

Transmission signal de calibration — 601

Séparation signaux/voies — 602

Détermination gains complexes relatifs — 603

Correction gain de l'antenne — 604

Estimation retard relatif — 605

Estimation phases relatives — 606

Correction gains, phases, retards — 607

FIG.6

```
┌ ─ ─ ─ ─ ─ ─ ─ ─ ─ ─ ─ ─ ─ ─ ┐
│      Transmission premier      │
│        signal calibration      │⌇── 701
└ ─ ─ ─ ─ ─ ─ ─ ─ ─ ─ ─ ─ ─ ─ ┘
                │
                ▼
┌ ─ ─ ─ ─ ─ ─ ─ ─ ─ ─ ─ ─ ─ ─ ┐
│       Génération signal de     │
│           référence            │⌇── 702
└ ─ ─ ─ ─ ─ ─ ─ ─ ─ ─ ─ ─ ─ ─ ┘
                │
                ▼
┌ ─ ─ ─ ─ ─ ─ ─ ─ ─ ─ ─ ─ ─ ─ ┐
│    Détermination premier gain  │
│    complexe relatif $G_0.e^{j\Phi 0}$  │⌇── 703
└ ─ ─ ─ ─ ─ ─ ─ ─ ─ ─ ─ ─ ─ ─ ┘
                │
                ▼
┌───────────────────────────────┐
│        Transmission second      │
│        signal de calibration    │⌇── 704
└───────────────────────────────┘
                │
                ▼
┌───────────────────────────────┐
│        Génération signal de     │
│            référence            │⌇── 705
└───────────────────────────────┘
                │
                ▼
┌───────────────────────────────┐
│     Détermination second gain   │
│     complexe relatif $G_{k/1}.e^{j\Phi k/1}$ │⌇── 706
└───────────────────────────────┘
                │
                ▼
$G_0.e^{j\Phi 0}$
┌───────────────────────────────┐
│     Détermination corrections   │
│            relatives            │⌇── 707
└───────────────────────────────┘
```

# FIG.7

EP 3 706 238 B1

FIG.8

24

FIG.9

EP 3 706 238 B1

FIG.10

**EP 3 706 238 B1**

## RÉFÉRENCES CITÉES DANS LA DESCRIPTION

**Documents brevets cités dans la description**

- US 5572219 A
- US 7825852 B2
- EP 3229383 A1
- EP 2555016 A1
- EP 2371072 A1
- US 2006044185 A1

**Littérature non-brevet citée dans la description**

- **SHUAI WANG.** *A low complexity calibration method for space-borne phased array antenna,* 2016
- **PIERRE ; KAVEH.** *experimental performance of calibration and direction-finding algorithms,* 1991